Europäisches Patentamt

European Patent Office

Office européen des brevets

(11) Publication number: **0 224 619
B1**

# EUROPEAN PATENT SPECIFICATION

(45) Date of publication of the patent specification:
28.03.90

(21) Application number: 85308010.9

(22) Date of filing: 04.11.85

(51) Int. Cl.⁴: **C22C 9/00**, F16C 33/12

(54) Bearing materials.

(43) Date of publication of application:
10.06.87 Bulletin 87/24

(45) Publication of the grant of the patent:
28.03.90 Bulletin 90/13

(84) Designated Contracting States:
DE FR GB IT

(56) References cited:
DE-C- 726 736
DE-C- 848 708
US-A- 2 975 255

CHEMICAL ABSTRACTS, vol. 96, no. 16, 19th April 1982,
page 351, abstract no. 128144z, Columbus, Ohio, US; &
JP - A - 81 142 389 (HITACHI CHEMICAL CO.
LTD.) 07-11-1981

(73) Proprietor: JPI Transportation Products, Inc., 325 E.
Eisenhower Parkway, Ann Arbor, Michigan 48104(US)

(72) Inventor: Lloyd, Kenneth, 1339 Balfour Road, Grosse
Pointe Park Michigan 48230(US)

(74) Representative: Blake, John Henry Francis et al,
BROOKES AND MARTIN High Holborn House 52/54 High
Holborn, London WC1V 6SE(GB)

**Description**

This invention relates to a copper base alloy for use as a bearing material, for example in thin shell bearings where the alloy requires to be bonded, by sintering, casting or rolling for example, to a steel black.

BACKGROUND OF THE INVENTION

Engine bearing alloys in use currently and hitherto have consisted of either an aluminum or copper matrix containing, among other additions, a major alloying addition of a low melting point phase. This low melting point phase is usually an elemental metal which is not soluble in the matrix and exists therefore as a discrete phase. In aluminum matrix alloys the well known and well used low melting point phases are tin, lead and cadmium and many alloys are currently in use containing these constituents.

DE-C-726 736 discloses a bearing material that includes more than 70% of copper, 2% to 10% of aluminum and 1% to 10% of lead. The lead may be partly replaced by inter alia bismuth.

DE-C-848 708 discloses a bearing material that includes between 50% to 78% copper and between 0.5% to 10% of lead with 0.05% to 5% of bismuth and/or 0.01% to 2% of thallium, with a balance of zinc. The lead may be replaced by bismuth or thallium.

Lead is one of the few low melting point metals which has the properties necessary to form a good bearing material with copper. The copper-lead alloys containing typically anything from 10% to 30% lead have given good service as engine bearing alloys for 60 years but they have some limitations which do not apply to the copper-bismuth alloys.

The two most serious problems with copper-lead alloys are:

(1) that lead is a toxic substance and the use of lead in the production of alloys is surrounded by legislation and expensive control procedures; and

(2) the lead phase in copper-lead alloys is seriously affected by corrosive attack in hot engine oil. When engine oil is oxidized while hot (during the normal running of an engine) the oil breaks down to form peroxides and organic acids which dissolve the lead phase; this seriously weakens the bearing alloys and clauses eventual malfunction and failure.

It has been found that copper-bismuth alloys are many times more resistant to this type of attack, and also possess superior properties to alloys currently in use as bearing materials.

SUMMARY OF THE INVENTION

According to the present invention there is provided a bearing comprising bearing material bonded to a steel backing, the bearing material comprising
10% to 20% by weight of bismuth,
0.5% to 4% by weight of tin,
0% to 1% by weight of lead,
0% to 2% by weight of silver,
0% to 1% by weight of antimony,
0% to 4% by weight of zinc,
0% to 0.1% by weight of phosphorus
0% to 15% by weight of nickel,
and the balance copper. Preferably there is from 12% to 18% by weight of bismuth and for some purposes there may be up to 35% by weight of bismuth. The copper may or may not constitute the whole balance but will usually constitute at least 50% by weight of the material.

Tests on a laboratory test rig which simulates a bearing environment have shown that the surface properties of copper-bismuth are superior to copper-lead alloys with the same volume percentage of second phase material. The test consists of pressing a sample of bearing material against a rotating shaft under conditions of sparse lubrication. The load is gradually increased until the bearing material "picks up" or seizes on the shaft. Tests on copper-14% by weight of lead and copper-12% by weight of bismuth have shown that the failure load for copper-lead was 60 pounds against an 80 pound failure load for copper-bismuth.

The other bearing properties of the copper-bismuth alloys have been found to be similar to those of the copper-lead alloys currently in use and the processes required for the manufacture of copper-bismuth alloys are basically the same as for copper-lead.

Although the basic alloys of this invention are all based on copper and bismuth, other additions can be made which are either to ease production or to modify the alloy properties. Tin or silicon, for example, can be added to strengthen and harden the matrix and lead, and antimony or zinc can be added to modify the bismuth phase and the behavior of the pre-alloyed mixture during processing.

One other unique feature of bismuth is that it is the only metal which expands on solidifying. This means that on solidification, where another soft phase (such as lead in copper) would shrink away from the surrounding matrix with the consequential risk of shrinkage void formation, bismuth expands by 3.5% and puts compressive stress in the surrounding matrix. This is believed to be the reason for the higher strength exhibited by the copper-bismuth alloy when compared with a copper-lead alloy containing an equivalent volume of soft phase.

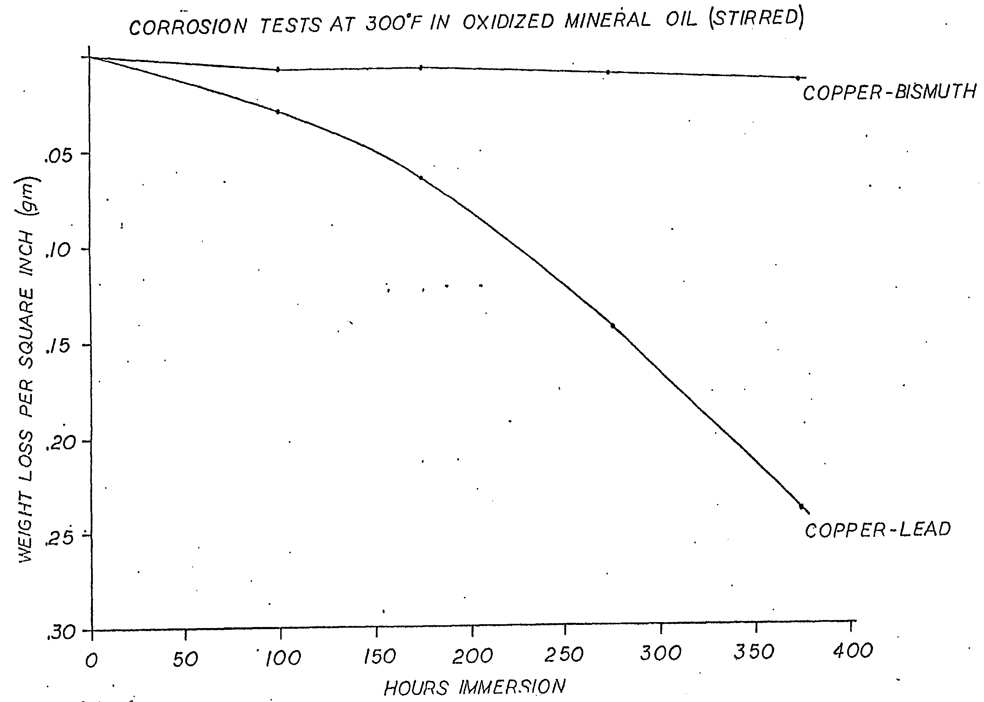

These and other features of the invention will become more apparent as the following description proceeds, especially when considered with the accompanying drawing.

BRIEF DESCRIPTION OF THE DRAWING

The single figure is a graph showing the resistance to the corrosive effects of the acid in oxidized engine oil on a copper-bismuth alloy as compared to a copper-lead alloy.

DETAILED DESCRIPTION

Copper-bismuth formulations within the following range provide bearing materials capable of acceptable performance.

A range would be:
10% - 20% by weight of bismuth
0.5% - 4% by weight of tin
0% - 1% by weight of lead balance copper

It is believed that the best results are obtainable from formulations within the following range:
12% to 18% by weight of bismuth
1% to 3% by weight of tin
0.5% by weight of lead balance copper

Depending upon special requirements for particular applications, additions of any one or more of the following elements in the indicated amounts may be made to the above formulations:
0% to 2% by weight of silver
0% to 1% by weight of antimony
0% to 4% by weight of zinc
0% to 0.1% by weight of phosphorous
0% to 15% by weight of nickel

Specific examples of alloys embodying the invention are as follows:

|  | | Bismuth | Tin | Lead | Copper |
|---|---|---|---|---|---|
| Example | I | 12% | 1% | 0% | 87% |
| Example | II | 16% | 0% | 0% | 84% |
| Example | III | 16% | 1% | 1% | 82% |
| Example | IV | 16% | 2% | 1% | 81% |
| Example | V | 16% | 2% | 2% | 80% |
| Example | VI | 16% | 4% | 1% | 79% |
| Example | VII | 18% | 2% | 0% | 80% |
| Example | VIII | 20% | 2% | 0% | ·78% |

Examples I - VIII were made by spreading powder of the appropriate composition onto steel strip, sintering in a protective atmosphere, rolling to 100% density and then re-sintering under appropriate conditions.

Referring to the drawing, there is a graph illustrating the resistance of a copper-bismuth alloy and a copper-lead alloy to the corrosive effects of the acid (tartaric acid) in engine oil. The copper-bismuth alloy consisted of 19.5% by weight of bismuth, 1.25% by weight of tin and the balance copper. The copper-lead alloy consisted of 23% by weight of lead, 1.25% by weight of tin and the balance copper. The volume of bismuth in the copper bismuth alloy was substantially the same as the volume of lead in the copper-lead alloy. The weight loss due to the corrosive effects of the acid was found to be substantially greater for the copper-lead alloy than for the copper-bismuth alloy.

## Claims

1. A bearing comprising bearing material bonded to a steel backing, the bearing material comprising
10% to 20% by weight of bismuth,
0.5 to 4% by weight of tin,
0% to 1% by weight of lead,
0% to 2% by weight of silver,
0% to 1% by weight of antimony,
0% to 4% by weight of zinc,
0% to 0.1% by weight of phosphorus,
0% to 15% by weight of nickel,
and the balance copper.

2. A bearing according to Claim 1, wherein the bearing material comprises
12% to 18% by weight of bismuth,
1% to 3% by weight of tin,
and 0% to 0.5% by weight of lead.

## Patentansprüche

1. Lager umfassend einen an eine Stahlunterlage gebundenen Werkstoff für Lager, wobei der Werkstoff für Lager umfaßt
10 bis 20 Gew.% Wismuth,
0,5 bis 4 Gew.% Zinn,
0 bis 1 Gew.% Blei,
0 bis 2 Gew.% Silber,
0 bis 1 Gew.% Antimon,
0 bis 4 Gew.% Zink,
0 bis 0,1 Gew.% Phosphor,
0 bis 15 Gew.% Nickel,
und als Rest Kupfer.

2. Lager nach Anspruch 1, dadurch gekennzeichnet, daß der Werkstoff für Lager enthält
12 bis 18 Gew.% Wismuth,
1 bis 3 Gew.% Zinn,
und 0 bis 0,5 Gew.% Blei.

## Revendications

Un palier comportant une matière de palier liée à un fond en acier, la matière de palier comportant
10% à 20% en poids de bismuth,
0,5% à 4% en poids d'étain,
0% à 1% en poids de plomb,
0% à 2% en poids d'argent,
0% à 1% en poids d'antimoine,
0% à 4% en poids de zinc,
0% à 0,1% en poids de phosphore,
0% à 15% en poids de nickel,
et le reste étant du cuivre.

2. Un palier selon la revendication 1, dans lequel la matière de palier comporte
12% à 18% en poids de bismuth,
1% à 3% en poids d'étain,
et 0% à 0,5% en poids de plomb.

CORROSION TESTS AT 300°F IN OXIDIZED MINERAL OIL (STIRRED)

COPPER-BISMUTH

COPPER-LEAD

WEIGHT LOSS PER SQUARE INCH (gm)

HOURS IMMERSION

EP 0 224 619 B1